# FASCICULE DE BREVET EUROPEEN

(11) **EP 3 623 213 B1**
(45) Date de publication et mention de la délivrance du brevet: **27.10.2021**
(21) Numéro de dépôt: 19197232.2
(22) Date de dépôt: 13.09.2019
(51) Int. Cl.: B60N 3/00, B60N 2/20

(54) **SIÈGE DE VÉHICULE ÉQUIPÉ D'UNE TABLETTE AMOVIBLE ET VÉHICULE COMPRENANT UN TEL SIÈGE**
FAHRZEUGSITZ, DER MIT EINER ENTFERNBAREN ABLAGE AUSGESTATTET IST, UND EINEN SOLCHEN SITZ ENTHALTENDES FAHRZEUG
VEHICLE SEAT PROVIDED WITH A REMOVABLE SHELF AND VEHICLE COMPRISING SUCH A SEAT

(30) Priorité: 13.09.2018 FR 1871030
(43) Date de publication de la demande: 18.03.2020
(73) Titulaire: RENAULT s.a.s., 92100 Boulogne-Billancourt (FR)
(72) Inventeur: ROUXEL, Yves, 78320 La Verrière (FR)

(56) Documents cités:
- FR-A1- 2 982 547
- FR-A1- 3 023 515
- FR-A3- 2 924 387

## Description

La présente invention concerne un siège de véhicule équipé d'une tablette amovible, ainsi qu'un véhicule équipé d'un tel siège. En particulier, elle concerne un siège dont le dossier peut se replier sur l'assise, et dont le dossier est équipé d'une tablette amovible et qui peut être fixée en position écritoire sur le dossier replié. Ce type de siège équipe principalement les véhicules de type utilitaire. Un exemple de tel siège est décrit dans le document FR2982547A1.

Dans le cas des véhicules utilitaires, les sièges équipés de tablettes écritoire sont très pratiques et donnent pleinement satisfaction. Néanmoins, il peut être souhaitable d'améliorer encore ces équipements afin notamment que ceux-ci puissent assurer des fonctions supplémentaires et complémentaires dans le véhicule.

La présente invention répond à cet objectif et propose un siège de véhicule automobile comprenant une assise et un dossier repliable comportant une face arrière munie d'une tablette, le dossier étant apte à être replié sur l'assise de manière à amener sa face arrière dans une position sensiblement horizontale, la tablette étant amovible et apposée contre la face arrière du dossier à l'intérieur d'un logement réalisé en face arrière de dossier de siège, caractérisée en ce que ladite tablette comprend une pluralité d'aimants et en ce que ledit siège présente sur sa face arrière des éléments de réception desdits aimants destinés à accueillir les aimants de la tablette lorsque cette dernière est placée dans le logement.

La face arrière du dossier est dotée d'au moins deux rainures alignées suivant un même axe, permettant de recevoir la tablette et la maintenir dans une position dressée lorsque ledit dossier est placé sensiblement horizontal, les deux rainures étant séparées par un espace de maintien et en ce que l'espace de maintien comprend un évidement destiné à recevoir un aimant de la tablette, lorsque cette dernière est placée en position dressée.

Avantageusement, grâce aux aimants et aux éléments de réception en face arrière du siège, la tablette est renforcée dans son maintien habituel en arrière de dossier. Avantageusement, grâce aux aimants, la tablette peut être placée et maintenue en d'autres localisations dans le véhicule, notamment le long des surfaces métalliques, par exemple à l'intérieur de l'espace de chargement. La tablette est ainsi non seulement utilisée pour l'écriture et la consultation de documents à l'intérieur de l'habitacle, mais aussi dans l'espace de chargement.

Dans des formes de réalisation préférées de l'invention, on a en outre recours à l'une et/ou à l'autre des dispositions suivantes prises seules ou en combinaison
- Les éléments de réception comprennent des évidements et ladite tablette est en contact avec la face arrière de dossier de siège au moins en partie au moyen desdits aimants insérés à l'intérieur des évidements.
- Les évidements sont de forme circulaire.
- Le dossier comprend au moins une portion métallique placée à proximité dudit au moins un évidement, afin de favoriser l'attraction des aimants de la tablette pour ladite portion métallique et ainsi renforcer la fixation de la tablette à la face arrière du dossier.
- Les éléments de réception sont constitués d'au moins une barre métallique et ladite tablette est en contact avec la face arrière de dossier de siège au moins en partie au moyen desdits aimants disposés au contact de la barre métallique.
- Le logement en face arrière de dossier présente à proximité de l'assise, un renfoncement et au moins un évidement disposé en partie sur le renfoncement et la tablette comporte un corps plan terminé par un bord incliné, ladite tablette étant disposée dans le logement de sorte que son bord incliné vienne s'insérer dans ledit renfoncement, et au moins un aimant soit inséré dans le au moins évidement.
- La face arrière du dossier est dotée d'au moins deux rainures alignées suivant un même axe, permettant de recevoir la tablette et la maintenir dans une position dressée lorsque ledit dossier est placé sensiblement horizontal, les deux rainures étant séparées par un espace de maintien, l'espace de maintien comprenant un évidement destiné à recevoir un aimant de la tablette, lorsque cette dernière est placée en position dressée.

L'invention concerne aussi un véhicule comportant une rangée d'au moins deux sièges, dont au moins un siège conforme à l'une quelconque des caractéristiques précédentes et/ ou une tablette selon les caractéristiques précédentes.

D'autres caractéristiques et avantages de l'invention apparaîtront au cours de la description suivante de plusieurs de ses formes de réalisation, données à titre d'exemples non limitatifs, en regard des dessins joints.

Sur les dessins:
[Fig. 1] représente une vue arrière du siège selon l'invention
[Fig. 2] est une vue latérale du siège avec un dossier replié sur l'assise en position tablette
[Fig. 3] est une vue arrière de la tablette avec ses aimants
[Fig. 4] est une vue de profil de la tablette
[Fig. 5] est une vue de l'espace de chargement d'un véhicule utilitaire
[Fig. 6] est une vue latérale du siège avec un dossier replié sur l'assise en position tablette dans un mode de réalisation alternatif

Dans le contexte de la présente demande, les termes « avant », « arrière », « gauche », « droite », « inférieur », « supérieur », s'entendent en référence à un repère des véhicules automobiles comprenant un premier axe longitudinal X, horizontal et orienté de l'arrière vers l'avant, c'est-à-dire du coffre vers le capot, un axe transversal Y et un axe vertical Z dirigé du bas vers le haut, c'est-à-dire du plancher vers le toit du véhicule, avec un siège disposé dans le véhicule, le dossier du siège étant en position d'utilisation face à la route.

Par ailleurs, sur les différentes figures, les mêmes références désignent des éléments identiques ou similaires.

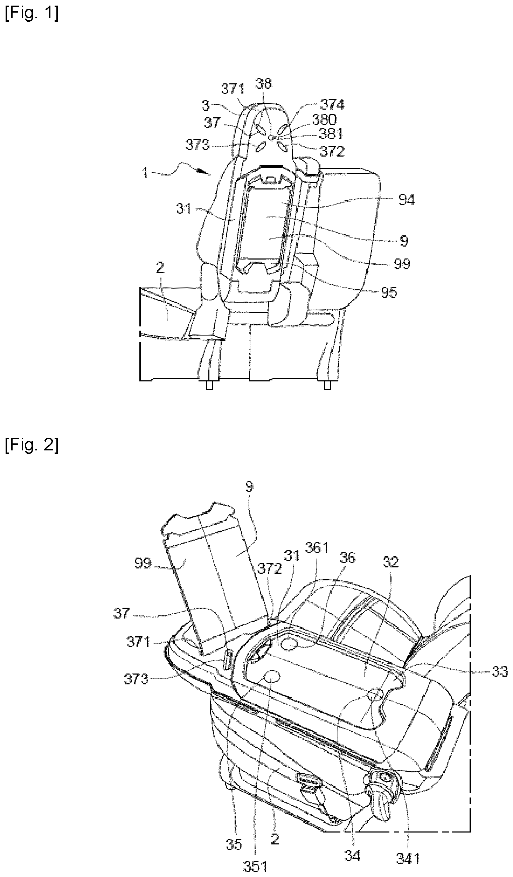

La figure 1 est une vue en perspective arrière d'un siège muni d'une tablette selon l'invention. Le siège comprend une assise 2 et un dossier 3 muni d'une coque arrière 31 contre laquelle est placée une tablette 9. Le siège appliquant l'invention est dans notre exemple un siège central de première rangée de véhicule utilitaire. Comme visible en figure 2, le siège 1 comporte un dossier 3 repliable sur l'assise 2 de manière à amener sa face arrière dans une position sensiblement horizontale. La face arrière de dossier est recouverte d'une coque arrière 31 en plastique, dans laquelle est aménagé un logement 32 à l'intérieur duquel on peut placer une tablette 9 amovible. En figure 1, la tablette est disposée à l'intérieur du logement et en figure 2, la tablette est extraite du logement.

Comme visible en figure 2, la tablette, extraite du logement, peut ensuite être placée en position écritoire, c'est à dire disposée à l'intérieur de rainures 37, 371, 372, 373, 374 localisées en partie haute de l'arrière de dossier, lorsque le dossier 3 est en position rabattue. Les rainures 37, 371, 372, 373, 374 sont au nombre de quatre et disposées suivant une forme en croix, deux rainures étant alignées suivant un premier axe et deux autres rainures étant alignées suivant un deuxième axe. Ces deux alignements permettent avantageusement deux dispositions distinctes de la tablette en mode dressée sur le dossier, une disposition orientée vers le conducteur ou une disposition orientée vers le passager avant.

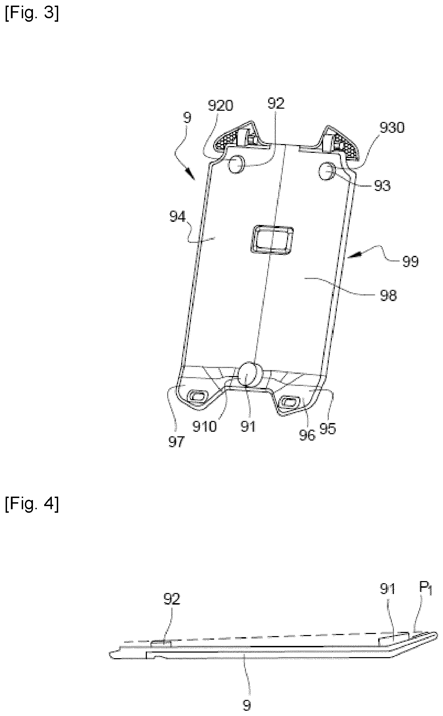

Comme visible en figure 3 et en figure 1, la tablette 9 comprend un corps plan 94 allongé, présentant à l'une de ses extrémités suivant la longueur un bord incliné 95 définissant une face intérieure 98 et une face extérieure 99 de tablette. La face intérieure 98 est visible en figure 3 et la face extérieure 99 est visible en figure 1 et en figure 2. La tablette est sensiblement rectangulaire. Comme visible en figure 3, la tablette comprend une pluralité d'aimants 91, 92, 93 saillants sur la face intérieure.

La tablette 9 est en contact avec la face arrière de dossier de siège au moyen des aimants 91, 92, 93. Le siège présente sur sa face arrière 31 des éléments de réception 34, 35, 36, 39 desdits aimants destinés à accueillir les aimants de la tablette 9 lorsque cette dernière est placée dans le logement 32.

Dans le mode de réalisation décrit en figure 2, le siège est muni d'éléments de réception 34, 35, 36, 39 qui comprennent des évidements 34, 35, 36 et la tablette 9 est en contact avec la face arrière de dossier de siège 31 au moins en partie au moyen des aimants 91, 92, 93 insérés à l'intérieur des évidements 34, 35, 36. En détail sur la figure 2, la tablette comprend trois aimants et le logement 32 en face arrière de dossier 31 présente du côté de l'assise, un renfoncement 33 et trois évidements 34, 35, 36. Les évidements 34, 35, 36 sont sensiblement de forme circulaire. Comme visible en figure 1, la tablette est disposée dans le logement 32 de sorte que son bord incliné 95 vienne s'insérer dans le renfoncement 33, et les trois aimants 91, 92, 93 insérés dans les trois évidements 34, 35, 36. Les évidements dans lesquels s'engagent les trois aimants 91, 92, 93 sont profonds et permettent de renforcer le maintien de la tablette dans son logement en arrière de dossier grâce au maintien réalisé par le contact des aimants avec les parois latérales de l'orifice de l'évidement. Les aimants sont en contact avec la surface intérieure de l'évidement par leur surface externe 910, 920, 930. La fixation peut encore être renforcée par le placement des évidements 34, 35, 36 sur le siège à proximité de portions métalliques d'armature 341, 351, 361 disposées en partie arrière de dossier de siège. Ce peut être par exemple des fils métalliques d'armature sur lesquels est fixé le carter de coque arrière de siège, ou bien ces portions métalliques 341, 351, 361 peuvent être constituées par le tube haut et bas de dossier directement localisé sous la face arrière de dossier. L'attraction est alors réalisée à travers la coque plastique arrière de dossier. Alternativement, les renforcements métalliques peuvent être affleurent à l'intérieur de l'élément de réception. Lorsque la tablette est fixée à l'arrière dans son logement 32, l'attraction des aimants de la tablette pour les portions métalliques 341, 351, 361 à l'intérieur des orifices des évidements 34, 35, 36 renforce la fixation de la tablette 9 à la face arrière du dossier 31.

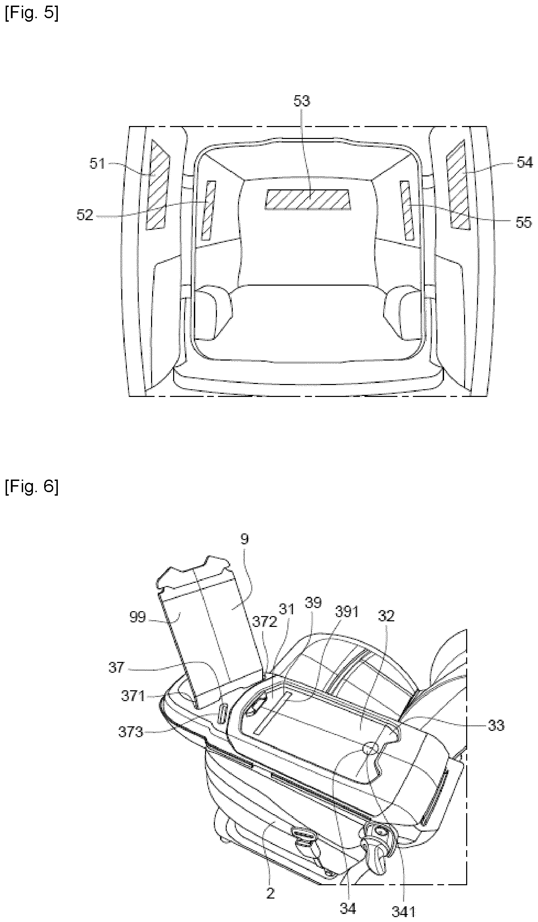

La figure 6 montre un mode de réalisation alternatif à celui de la figure 2. Les éléments de réception 34, 35, 36, 39 sont constitués d'une barre métallique 391 et la tablette 9 est en contact avec la face arrière de dossier de siège 31 au moins en partie au moyen des aimants 91, 92, 93 disposés au contact de la barre métallique 391.

De plus, les aimants 91, 92, 93 permettent non seulement de renforcer la fixation de la tablette 9 dans le logement en arrière de dossier, ils permettent aussi à la tablette 9 d'être positionnée le long de toute surface métallique plane 51, 52, 53, 54, 55 présente à l'intérieur et à l'extérieur du véhicule, comme visible en figure 5. Ces surfaces 51, 52, 53, 54, 55 sont situées sur les cloisons latérales et les portières délimitant l'espace de chargement. La fixation sur les surfaces latérales est pratique, et permet avantageusement, par exemple, au cours d'opérations de livraison avec un véhicule utilitaire, à l'occupant de ne plus égarer la tablette 9 et d'éviter de poser la tablette 9 sur le plancher du véhicule.

De manière préférentielle, comme visible en figure 3, la tablette comprend trois aimants 91, 92, 93 sur sa face arrière 98 et ceux-ci sont répartis suivant deux hauteurs distinctes, à savoir deux aimants sont placés alignés en partie supérieure et un aimant en partie inférieure de tablette. Les deux aimants en partie supérieure permettent de renforcer la fixation de la tablette en partie supérieure et d'assurer ainsi une meilleure solidarisation au support en partie supérieure. Le maintien de la tablette, dans le cas où celle -ci est placée verticalement en mode écritoire, est ainsi améliorée, notamment dans le cas où la partie supérieure de la tablette est disposée vers le haut sur le support.

Une répartition des aimants suivant deux alignements distincts permet de plus, de faciliter le retrait de la tablette des parois contre lesquelles celle-ci est fixée, en offrant un passage libéré entre les deux alignements, ce passage étant utilisable pour la préhension avec les doigts de la main de la tablette. De manière préférentielle, la tablette comprend un unique aimant 91 en partie basse, et celui-ci est disposé entre deux lobes latéraux 96, 97, en détail dans l'espace de jonction entre les deux lobes latéraux. Les lobes latéraux 96, 97 sont notamment utilisés pour la fixation en mode écritoire en arrière de dossier. Ces derniers sont ainsi placés à l'intérieur des rainures 37, 371, 372, 373, 374 pour le positionnement de la tablette en mode écritoire. L'aimant 91 en partie basse, est fixé à la jonction des deux lobes, et permet de renforcer encore l'adhérence de la tablette au support lorsque celle-ci est disposée verticalement, notamment de façon dressée en mode écritoire. Dans un mode de réalisation particulier, les rainures 37, 371, 372, 373, 374 comprennent un espace de maintien 38 situé au croisement des quatre rainures, l'espace de maintien comprenant un évidement 380 destiné à recevoir un aimant 91, 92, 93 de la tablette lorsque la tablette est placée en position dressée. Dans un mode de réalisation alternatif ou en complément, l'espace de maintien comprend un renforcement métallique 381 destiné à favoriser l'attraction d'au moins un aimant 91, 92, 93 de la tablette, lorsque cette dernière est placée en position dressée, le renforcement métallique est destiné à favoriser l'attraction d'au moins un aimant de la tablette, notamment l'aimant placé en partie basse, et permettant ainsi de renforcer la fixation en position écritoire de la tablette sur le siège.

Dans le mode de réalisation décrit, l'aimant 91 en partie basse est situé sensiblement au milieu de la tablette, à égale distance de même des aimants 92, 93 localisés en partie haute de tablette, ce qui permet de d'équilibrer l'attraction exercée par les trois aimants vers le support. Comme visible plus en détail en figure 4 dans le mode de réalisation décrit, les trois aimants 91, 92, 93 ont une portion de surface saillante comprise dans un même plan P1. Ce plan est celui d'un support sur lequel serait positionné la face arrière de la tablette. Une fixation des trois aimants, et donc de la tablette, est avantageusement possible sur un support plan. Des exemples de surfaces de fixation sont divulguées en figure 5, montrant une vue de l'espace de chargement d'un véhicule utilitaire. Les surfaces de fixation 51, 52, 53, 54, 55 sont situées sur les parois latérales intérieures du véhicule et le long des portes de l'arrière notamment. La tablette peut aussi adhérer sur une surface non nécessairement strictement plane, avec une adhérence réduite cependant, car dépendante de la proximité des aimants avec le support. La tablette est prévue pour être utilisée exclusivement à l'arrêt, celle -ci doit être remise en place à l'arrière de dossier pour le roulage.

Les aimants utilisés peuvent être par exemple des aimants de forme circulaire, ce qui permet de renforcer le centrage lors de la fixation de la tablette dans son logement, et en matière néodyme avec revêtement en caoutchouc sur leur surface externe afin de protéger les surfaces peintes du véhicule contre les rayures qui pourraient être occasionnées lors de la manipulation de la tablette. Des aimants en ferrite peuvent être aussi alternativement être envisagés.

La tablette est utilisée de la façon suivante : Après désengagement de son logement en face arrière de dossier par l'usager, elle peut être placée dans les rainures 37, 371, 372, 373, 374 en haut de dossier en regard du conducteur ou d'un occupant passager, ou être mise en attente de façon aisée, sur une quelconque surface métallique à l'intérieur dans l'espace de chargement ou à l'extérieur du véhicule, au choix de l'utilisateur. Dans toutes ces positions, les aimants 91, 92 et 93 viennent en renfort ou assurent intégralement la fixation au support. L'invention n'est en aucun cas limitée aux modes de réalisation décrits.

## Revendications

1. Siège (1) de véhicule automobile comprenant une assise (2) et un dossier (3) repliable comportant une face arrière (31) munie d'une tablette (9), le dossier (3) étant apte à être replié sur l'assise (2) de manière à amener sa face arrière (31) dans une position sensiblement horizontale, la tablette (9) étant amovible et apposée contre la face arrière (31) du dossier (3) à l'intérieur d'un logement (32) réalisé en face arrière de dossier de siège (31), **caractérisée en ce que** ladite tablette (9) comprend une pluralité d'aimants (91, 92, 93) et **en ce que** ledit siège présente sur sa face arrière (31) des éléments de réception (34, 35, 36, 39) desdits aimants destinés à accueillir les aimants (91, 92, 93) de la tablette (9) lorsque cette dernière est placée dans le logement (32), la face arrière du dossier (31) étant dotée d'au moins deux rainures (371, 372, 373, 374) alignées suivant un même axe, permettant de recevoir la tablette (9) et la maintenir dans une position dressée lorsque ledit dossier est placé sensiblement horizontal, les deux rainures étant séparées par un espace de maintien (38) et **en ce que** l'espace de maintien comprend un évidement (380) destiné à recevoir un aimant (91, 92, 93) de la tablette, lorsque cette dernière est placée en position dressée..

2. Siège (1) de véhicule selon la revendication précédente, **caractérisé en ce que** les éléments de réception (34, 35, 36, 39) comprennent des évidements (34, 35, 36) et **en ce que** ladite tablette (9) est en contact avec la face arrière de dossier de siège (31) au moins en partie au moyen desdits aimants (91, 92, 93) insérés à l'intérieur des évidements (34, 35, 36).

3. Siège (1) de véhicule selon la revendication précédente, **caractérisé en ce que** les évidements (34, 35, 36) sont de forme circulaire.

4. Siège (1) de véhicule selon la revendication précédente, **caractérisé en ce que** le dossier (3) comprend au moins une portion métallique (341, 351, 361) placée à proximité dudit au moins un évidement (34, 35, 36), afin de favoriser l'attraction des aimants (91, 92, 93) de la tablette pour ladite portion métallique (341, 351, 361) et ainsi renforcer la fixation de la tablette à la face arrière du dossier.

5. Siège (1) de véhicule selon la revendication 1, **caractérisé en ce que** les éléments de réception (34, 35, 36, 39) sont constitués d'au moins une barre métallique (391) et **en ce que** ladite tablette (9) est en contact avec la face arrière de dossier de siège (31) au moins en partie au moyen desdits aimants (91, 92, 93) disposés au contact de la barre métallique (391).

6. Siège (1) de véhicule selon l'une quelconque des revendications précédentes, **caractérisé en ce que** le logement (32) en face arrière de dossier (31) présente à proximité de l'assise (2), un renfoncement (33) et au moins un évidement (34) disposé en partie sur le renfoncement (33) et **en ce que** la tablette comporte un corps plan (94) terminé par un bord incliné (95), ladite tablette étant disposée dans le logement (32) de sorte que son bord incliné (95) vienne s'insérer dans ledit renfoncement (33), et **en ce qu'** au moins un aimant (91) soit inséré dans le au moins évidement (34).

7. Siège de véhicule selon l'une quelconque des revendications précédentes, **caractérisé en ce que** la face arrière du dossier (31) est dotée d'au moins deux rainures (371, 372, 373, 374) alignées suivant un même axe, permettant de recevoir la tablette (9) et la maintenir dans une position dressée lorsque ledit dossier est placé sensiblement horizontal, les deux rainures étant séparées par un espace de maintien (38), **caractérisé en ce que** l'espace de maintien comprend un renforcement métallique (381) destiné à favoriser l'attraction d'au moins un aimant (91, 92, 93) de la tablette, lorsque cette dernière est placée en position dressée.

8. Véhicule comportant une rangée d'au moins deux sièges, **caractérisé en ce qu'**il comprend au moins un siège (1) conforme à l'une quelconque des revendications précédentes.

## Patentansprüche

1. Kraftfahrzeugsitz (1), der eine Sitzfläche (2) und eine umklappbare Rückenlehne (3) enthält, die eine mit einer Platte (9) versehene Rückseite (31) aufweist, wobei die Rückenlehne (3) auf die Sitzfläche (2) umgeklappt werden kann, um ihre Rückseite (31) in eine im Wesentlichen waagrechte Stellung zu bringen, wobei die Platte (9) entfernbar ist und gegen die Rückseite (31) der Rückenlehne (3) im Inneren einer Aufnahme (32) angebracht werden kann, die in der Sitzrückenlehnenrückseite (31) hergestellt ist, **dadurch gekennzeichnet, dass** die Platte (9) eine Vielzahl von Magneten (91, 92, 93) enthält, und dass der Sitz an seiner Rückseite (31) Empfangselemente (34, 35, 36, 39) der Magnete aufweist, die dazu bestimmt sind, die Magnete (91, 92, 93) der Platte (9) aufzunehmen, wenn letztere in der Aufnahme (32) angeordnet wird, wobei die Rückseite der Rückenlehne (31) mit mindestens zwei gemäß einer gleichen Achse ausgerichteten Rillen (371, 372, 373, 374) versehen ist, die es ermöglichen, die Platte (9) zu empfangen und sie in einer aufgerichteten Stellung zu halten, wenn die Rückenlehne im Wesentlichen waagrecht angeordnet ist, wobei die zwei Rillen durch einen Halteraum (38) getrennt sind, und dass der Halteraum eine Aussparung (380) enthält, die dazu bestimmt ist, einen Magnet (91, 92, 93) der Platte zu empfangen, wenn letztere in aufgerichteter Stellung angeordnet ist.

2. Fahrzeugsitz (1) nach dem vorhergehenden Anspruch, **dadurch gekennzeichnet, dass** die Empfangselemente (34, 35, 36, 39) Aussparungen (34, 35, 36) enthalten, und dass die Platte (9) zumindest zum Teil mittels der ins Innere der Aussparungen (34, 35, 36) eingefügten Magnete (91, 92, 93) mit der Sitzrückenlehnenrückseite (31) in Kontakt ist.

3. Fahrzeugsitz (1) nach dem vorhergehenden Anspruch, **dadurch gekennzeichnet, dass** die Aussparungen (34, 35, 36) kreisförmig sind.

4. Fahrzeugsitz (1) nach dem vorhergehenden Anspruch, **dadurch gekennzeichnet, dass** die Rückenlehne (3) mindestens einen metallischen Abschnitt (341, 351, 361) enthält, der in der Nähe der mindestens einen Aussparung (34, 35, 36) angeordnet ist, um die Anziehung der Magnete (91, 92, 93) der Platte für den metallischen Abschnitt (341, 351, 361) zu begünstigen und so die Befestigung der Platte an der Rückseite der Rückenlehne zu verstärken.

5. Fahrzeugsitz (1) nach Anspruch 1, **dadurch gekennzeichnet, dass** die Empfangselemente (34, 35, 36, 39) aus mindestens einem Metallstab (391) bestehen, und dass die Platte (9) mit der Sitzrückenlehnenrückseite (31) zumindest zum Teil mittels der Magnete (91, 92, 93) in Kontakt ist, die in Kontakt mit dem Metallstab (391) angeordnet sind.

6. Fahrzeugsitz (1) nach einem der vorhergehenden Ansprüche, **dadurch gekennzeichnet, dass** die Aufnahme (32) an der Rückenlehnenrückseite (31) in der Nähe der Sitzfläche (2) eine Vertiefung (33) und mindestens eine Aussparung (34) aufweist, die zum Teil auf der Vertiefung (33) angeordnet ist, und dass die Platte einen ebenen Körper (94) aufweist, der in einem geneigten Rand (95) endet, wobei die Platte so in der Aufnahme (32) angeordnet ist, dass ihr geneigter Rand (95) sich in die Vertiefung (33) einfügt, und dass mindestens ein Magnet (91) in die mindestens eine Aussparung (34) eingefügt wird.

7. Fahrzeugsitz nach einem der vorhergehenden Ansprüche, **dadurch gekennzeichnet, dass** die Rückseite der Rückenlehne (31) mit mindestens zwei gemäß einer gleichen Achse ausgerichteten Rillen (371, 372, 373, 374) versehen ist, die es ermöglichen, die Platte (9) zu empfangen und sie in einer aufgerichteten Stellung zu halten, wenn die Rückenlehne im Wesentlichen waagrecht angeordnet ist, wobei die zwei Rillen durch einen Halteraum (38) getrennt sind, **dadurch gekennzeichnet, dass** der Halteraum eine metallische Verstärkung (381) enthält, die dazu bestimmt ist, die Anziehung mindestens eines Magneten (91, 92, 93) der Platte zu begünstigen, wenn letztere in aufgerichteter Stellung angeordnet ist.

8. Fahrzeug, das eine Reihe von mindestens zwei Sitzen aufweist, **dadurch gekennzeichnet, dass** es mindestens einen Sitz (1) gemäß einem der vorhergehenden Ansprüche enthält.

## Claims

1. Motor vehicle seat (1) comprising a squab (2) and a foldable backrest (3) having a rear face (31) provided with a tray (9), the backrest (3) being able to be folded onto the squab (2) so as to bring its rear face (31) into a substantially horizontal position, the tray (9) being removable and fixed against the rear face (31) of the backrest (3) inside a housing (32) provided in the rear face (31) of the seat backrest, **characterized in that** said tray (9) comprises a plurality of magnets (91, 92, 93), and **in that** said seat has, on its rear face (31), receiving elements (34, 35, 36, 39) for said magnets that are intended to accommodate the magnets (91, 92, 93) of the tray (9) when the latter is placed in the housing (32), the rear face of the backrest (31) being provided with at least two grooves (371, 372, 373, 374) which are aligned along the same axis, making it possible to receive the tray (9) and to hold it in an upright position when said backrest is placed substantially horizontally, the two grooves being separated by a holding space (38), and **in that** the holding space comprises a cutout (380) intended to receive a magnet (91, 92, 93) of the tray when the latter is placed in the upright position.

2. Vehicle seat (1) according to the preceding claim, **characterized in that** the receiving elements (34, 35, 36, 39) comprise cutouts (34, 35, 36), and **in that** said tray (9) is in contact with the rear face (31) of the seat backrest at least in part by means of said magnets (91, 92, 93) inserted inside the cutouts (34, 35, 36).

3. Vehicle seat (1) according to the preceding claim, **characterized in that** the cutouts (34, 35, 36) are of circular shape (4).

4. Vehicle seat (1) according to the preceding claim, **characterized in that** the backrest (3) comprises at least one metallic portion (341, 351, 361) placed in the vicinity of said at least one cutout (34, 35, 36), in order to promote the attraction of the magnets (91, 92, 93) of the tray for said metallic portion (341, 351, 361) and thus to reinforce the fastening of the tray to the rear face of the backrest.

5. Vehicle seat (1) according to Claim 1, **characterized in that** the receiving elements (34, 35, 36, 39) are formed by at least one metallic bar (391), and **in that** said tray (9) is in contact with the rear face (31) of the seat backrest at least in part by means of said magnets (91, 92, 93) arranged in contact with the metallic bar (391).

6. Vehicle seat (1) according to any one of the preceding claims, **characterized in that** the housing (32) in the rear face (31) of the backrest has, in the vicinity of the squab (2), a recess (33) and at least one cutout (34) arranged in part on the recess (33), and **in that** the tray comprises a flat body (94) terminated by an inclined edge (95), said tray being arranged in the housing (32) such that its inclined edge (95) is inserted into said recess (33), and **in that** at least one magnet (91) is inserted into the at least one cutout (34).

7. Vehicle seat according to any one of the preceding claims, **characterized in that** the rear face (31) of the backrest is equipped with at least two grooves (371, 372, 373, 374) which are aligned along the same axis, making it possible to receive the tray (9) and to hold it in an upright position when said backrest is placed substantially horizontally, the two grooves being separated by a holding space (38), **characterized in that** the holding space comprises a metallic recess (381) intended to promote the attraction of at least one magnet (91, 92, 93) of the tray when the latter is placed in the upright position.

8. Vehicle having a row of at least two seats, **characterized in that** it comprises at least one seat (1) according to any one of the preceding claims.
